# EUROPEAN PATENT SPECIFICATION

(11) **EP 3 130 509 B1**
(45) Date of publication and mention of the grant of the patent: **18.12.2019**
(21) Application number: 16182531.0
(22) Date of filing: 03.08.2016
(51) Int. Cl.: B60R 9/10

(54) **TILTING MECHANISM OF A CONVEYOR DEVICE, PREFERABLY FOR BICYCLES, WHICH CAN BE ATTACHED TO A CAR**
SCHWENKMECHANISMUS FÜR EINE TRANSPORTVORRICHTUNG, VORZUGSWEISE FÜR ZWEIRÄDER, WELCHER AM FAHRZEUG BEFESTIGT WERDEN KANN
MECANISME DE PIVOTAGE POUR UN DISPOSITIF DE TRANSPORT, DE PREFERENCE POUR UN BICICLETTE ATTACHABLE À UNE VOITURE

(30) Priority: 13.08.2015 IT UB20153099
(43) Date of publication of application: 15.02.2017
(73) Proprietor: ELITE S.R.L., I-35014 Fontaniva (Padova) (IT)
(72) Inventor: SARTORE, Andrea, 35014 FONTANIVA (UD) (IT); SARTORE, Nicoletta, 35014 FONTANIVA (UD) (IT)
(74) Representative: Locas, Davide

(56) References cited:
- EP-A1- 2 848 473
- EP-A1- 2 863 070
- US-A1- 2005 230 444
- US-A1- 2007 057 001
- US-B1- 6 286 738

## Description

The present invention is within the transporting devices suitable for holding and carrying loads, in particular refers to transporting devices for bicycles, which can be attached to a car, for example to the tow hook or to the trunk door.

Currently, there are on the market various transporting devices which can be attached to external elements of a car, which are usually used for transporting bulky items, as ski or bicycles.

In detail, in case of devices attached to the back of the car, they provide the possibility of lifting a bicycle for a small height, substantially corresponding to the one of the tow hook or to the one of the trunk door. Nevertheless, the known devices have load systems for the bicycles requiring a certain amount of effort by the user.

Some systems provide the use of accessories connecting the floor to the bike rack by creating a linking ramp which, after use, shall be removed, with the evident drawback of having to dismantle and reassemble a further accessory.

Other systems provide a sliding element on the rack for wheels, which has to be dragged until it touches the floor before being brought in the initial position subsequent to having put the bicycles on; nevertheless, also in this case, there are considerable disadvantages due to the considerable increase in the whole weight of the product, as well as to the need of operate the system for every single bicycle. US 2007/057001 A shows a tilting mechanism for such transporting devices. Another example of such mechanism is known by EP 2 848 473 A1.

The present invention aims to overcome such disadvantage realizing a tilting mechanism of a transporting device, preferably for bicycles, which can be attached to a car.

In particular, purpose of the invention is of realizing a tilting mechanism of a transporting device, preferably for bicycles, which can be attached to a car, which makes bicycles load and unload operations easier and more comfortable for the user.

This and other purposes are achieved by means of a transporting device, preferably for bicycles, which can be attached to a car, according to the attached claim 1, to which reference is made, for the sake of brevity.

Other technical details of the tilting mechanism of a transporting device in question are reported in the dependent claims.

In particular, the subject of the invention is a tilting mechanism of a transporting device, preferably for bicycles, comprising a first movable element, which is connected to a load base of the transporting device and a second fixed element, wherein the first element is movable with respect to the second element; the first element has a movable locking pin, while the second element has a match with which the locking pin is engageable, so as the first element may move from a first locking condition, wherein the rotation of the first element in respect with the second element is prevented, to a second movable condition, wherein the rotation of the first element in respect with the second element is possible.

Advantageously, this allows keeping the load base blocked in horizontal position, and releasing it in order to make it rotate towards a desired angle.

Furthermore, the mechanism has a limited number of pieces and is simple to be realized, cutting the cost of production of the transporting device and of storage for the semi-finished products.

Preferably, according to the invention, the first element has a slot having a circular cross section, while the second element has a circular cross section corresponding to the cross section of the slot, so as the first element may rotate about the second element.

This allows advantageously obtaining a compact mechanism having a small volume, minimizing the volume and the total weight of the transporting device.

Furthermore, according to the invention, the second element may have end stops suitable for straitening the rotation of the first element in respect with the second element when in movable condition.

Thus it is possible, advantageously, controlling the rotation of the load base, e.g. preventing it from the complete roll over, and making the transporting device safer for the user.

In such case, for example, the end stops may comprise further matches, making the mechanism easy to implement.

Always according to the invention, each match may have inside elastic means, suitable for holding the pin inside the same match.

In this way, advantageously, the use of the transporting device of the invention is made safer, avoiding e.g. the release of the tilt of the load base during the trip, with obvious consequences.

Moreover, according to the invention, connecting the pin to remote driving means is possible, so as to facilitate and make more comfortable the operations of blocking and releasing of the load base.

In such case, for example, the remote driving means may comprise a cable equipped with a first end and a second end, the first end is connected to the pin and the second end is equipped with gripping means, e.g. a lever.

Another subject of the invention is a transporting device, preferably for bicycles, comprising a load base connected to a tilting mechanism of the invention.

Preferably, according to the invention, the load base may have slots for housing the wheels of a bicycle.

The purposes and the abovementioned advantages, as well as other ones which will be clear hereinafter, will appear more evident in the following description, relating to a favourite embodiment of the invention, given by example and not limiting, in the attached drawings, wherein:

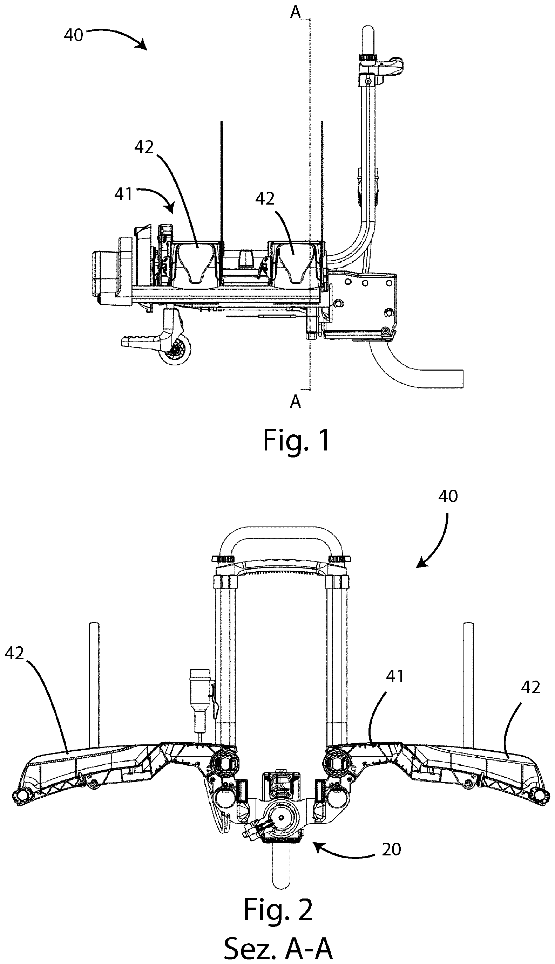

- figure 1 shows a side view of the transporting device of the invention;
- figure 2 shows the cross section A-A of the device of figure 1;
- figure 3 shows a detail of figure 2;
- figure 4 shows a schematic diagram of the mechanism of figure 3, in a first position;
- figure 5 shows a schematic diagram of the mechanism of figure 3, in a second position;
- figure 6 shows a schematic diagram of the mechanism of figure 3, in a third position.

With reference to the mentioned figures, the mechanism 20 comprises a first moveable element 1, and a second element 2, fixed, in respect with which the first element 1 is able to rotate.

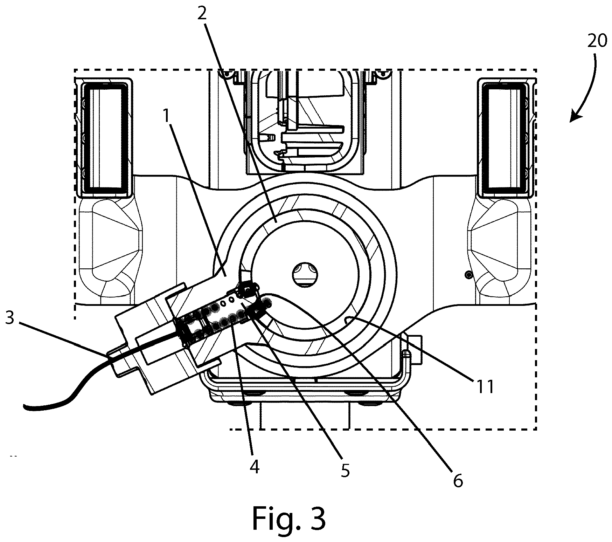

In the favourite variant of the invention, shown in figures 3-6, the second element 2 has circular cross section, while the first element 1 has a slot 11 with a circular cross section, having dimensions corresponding to those of the second element 2, so as the second element 2 may be inserted inside the slot 11 of the first element.

The first element 1 has furthermore a locking pin 5, while the second element 2 has a channel 6, wherein the locking pin 5 can be inserted.

Preferably also a cable 3 is present, connected at a first of its ends to the locking pin 5, and at the second of its ends (not shown) to a lever, e.g. placed in correspondence with a licence plate holder of the transporting device.

Equally preferably, within such channel 6 there is a spring 4, suitable for holding the pin 5 inside the same channel 6.

In rest position (lever not actuated), the spring 4 keeps pushing the pin 5 inside the element 2 and the element 1 creating a single block and not allowing any rotation, while in working position (lever actuated), the spring 4 is compressed by the pin 5 which is pushed in the same compression direction of the spring 4. Such operation leads to release the element 2 from the pin 5 allowing the rotation to the right or to the left of the whole system.

In this way, advantageously, blocking the load base 41 of the transporting device 40 in horizontal position is possible, while releasing it, the latter will rotate until reaching with one of its sides the floor, allowing loading and unloading the bicycle simply making it advance on its own wheels, as on a ramp.

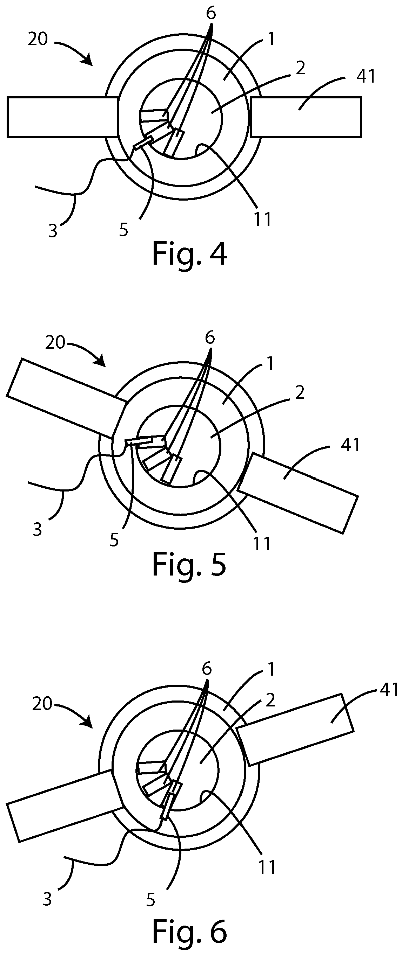

Preferably, as shown in figures 4-6, providing more than a channel 6 in the second element 2, e.g. 3 channels 6, as shown in the figures, is possible, in order to provide three positions wherein blocking the load base 41 of the transporting device 40, e.g. in horizontal position, in tilted position by 25° clockwise and in tilted position by 25° counter clockwise.

Operationally, rotating upwards such lever, tension is put in the cable 3, at the end of which the locking pin 5 is firmly attached, which in turn compresses the spring 4 and casts off the channel 6.

Once the pin 5 is unblocked, tilting the load base 41 is possible, until the locking pin 5 inserts in the new channel 6 of the second element 2, which may act as its end stop.

The tilted load base 41 allows effortlessly loading the bicycles thanks also to the shape of the slots 42 for the wheels which act as ramp for loading.

The reverse operation, i.e. operating the lever which is connected to the cable 3 which releases again the locking pin 5 from the channel 6, allows repositioning the load base 41 in horizontal or, operating a second time the lever, tilting it by the opposite direction.

## Claims

1. Transporting device (40) for bicycle attachable to a tow hook of a car and comprising a load base (41) and a tilting mechanism (20) for rotating said load base (41), said tilting mechanism (20) comprising a first moveable element (1), connected to said load base (41) and a second fixed element (2), the first element (1) being movable with respect to the second element (2), wherein the first element (1) has a moveable locking pin (5) and the second element (2) has a match (6) in which the locking pin (5) is engageable, so that the first element (1) may move from a first locking condition, in which its rotation in respect with the second element (2) is prevented and said load base (41) is blocked in a horizontal position, to a second movable condition, in which its rotation in respect with the second element (2) is possible, allowing rotation both in a clockwise and in a counter-clockwise direction of said load base (41), the load base (41) having slots (42) suitable for housing the wheels of a bicycle.

2. Transporting device (40) according to claim 1, wherein said tilting mechanism (20) comprises a spring (4) pushing said pin (5) inside said second element (2) and said first element (1) creating a single block and not allowing any rotation in said first locking condition, while in said second movable condition said spring (4) is compressed by said pin (5) which is pushed in the same compression direction of said spring (4), thus releasing said second element (2) from said pin (5) allowing said clockwise and counter-clockwise rotation of the load base (41) connected to said first movable element (1).

3. Transporting device (40) according to claim 2, wherein said match (6) is formed by a channel, three channels being provided in said second element (2) so as to provide three positions in which the load base (41) can be blocked.

4. Transporting device (40) according to claim 3, wherein said three positions includes an horizontal position, a tilted position by 25° clockwise and a tilted position by 25° counter clockwise.

5. Transporting device (40) according to anyone of the preceding claims, wherein the first element (1) has a slot (11) having a circular cross section, and in that the second element (2) has a circular cross section corresponding to the cross section of the slot (11), so that the first element (1) is able to rotate about the second element (2).

6. Transporting device (40) according to claim 1, wherein the second element (2) has end stops suitable for straitening the rotation of the first element (1) in respect with the second element (2) when in movable condition.

7. Transporting device (40) according to one of claims 2-4, wherein one spring (4) is inside each match (6), suitable for retaining the pin (5) inside the match (6).

8. Transporting device (40) according to one of claims 1-7, wherein the pin (5) is connected to remote driving means (3).

9. Transporting device (40) according to claim 8, wherein the remote driving means comprise a cable equipped with a first end and a second end, the first end being connected to the pin (5) and the second end being equipped with gripping means.

10. Transporting device (40) according to anyone of the preceding claims, wherein said slots (42) are shaped so as to act as ramp for the wheels of the bicycle.

## Patentansprüche

1. Transportvorrichtung (40) für ein Zweirad, die an einem Abschlepphaken eines Autos befestigbar ist und eine Ladefläche (41) und einen Schwenkmechanismus (20) zum Drehen der Ladefläche (41) aufweist, wobei der Schwenkmechanismus (20) ein erstes bewegliches Element (1), das mit der Ladefläche (41) verbunden ist, und ein zweites fixiertes Element (2) aufweist, wobei das erste Element (1) in Bezug auf das zweite Element (2) beweglich ist, wobei das erste Element (1) einen beweglichen Verriegelungsstift (5) und das zweite Element (2) eine Passung (6) aufweist, in die der Verriegelungsstift (5) eingreifen kann, so dass sich das erste Element (1) aus einem ersten Verriegelungszustand, in dem seine Drehung in Bezug auf das zweite Element (2) verhindert wird und die Ladefläche (41) in einer horizontalen Position blockiert wird, zu einem zweiten beweglichen Zustand bewegen kann, in dem seine Drehung in Bezug auf das zweite Element (2) möglich ist, wobei eine Drehung sowohl im Uhrzeigersinn als auch gegen den Uhrzeigersinn der Ladefläche (41) ermöglicht wird, wobei die Ladefläche (41) Schlitze (42) aufweist, die zur Aufnahme der Räder eines Zweirads geeignet sind.

2. Transportvorrichtung (40) nach Anspruch 1, wobei der Schwenkmechanismus (20) eine Feder (4) aufweist, die den Stift (5) in das zweite Element (2) drückt, und das erste Element (1) einen einzelnen Block bildet und im ersten Verriegelungszustand keine Drehung zulässt, während im zweiten beweglichen Zustand die Feder (4) durch den Stift (5) zusammengedrückt wird, der in die gleiche Kompressionsrichtung der Feder (4) gedrückt wird, wodurch das zweite Element (2) vom Stift (5) gelöst wird, wobei eine Drehung im Uhrzeigersinn und gegen den Uhrzeigersinn der Ladefläche (41), die mit dem ersten beweglichen Element (1) verbunden ist, ermöglicht wird.

3. Transportvorrichtung (40) nach Anspruch 2, wobei die Passung (6) durch einen Kanal gebildet wird, wobei drei Kanäle im zweiten Element (2) vorgesehen sind, um so drei Positionen vorzusehen, in denen die Ladefläche (41) blockiert werden kann.

4. Transportvorrichtung (40) nach Anspruch 3, wobei die drei Positionen eine horizontale Position, eine geneigte Position um 25° im Uhrzeigersinn und eine geneigte Position um 25° gegen den Uhrzeigersinn umfassen.

5. Transportvorrichtung (40) nach einem der vorhergehenden Ansprüche, wobei das erste Element (1) einen Schlitz (11) mit kreisförmigem Querschnitt aufweist, und dadurch das zweite Element (2) einen kreisförmigen Querschnitt aufweist, der dem Querschnitt des Schlitzes (11) entspricht, so dass das erste Element (1) in der Lage ist, sich um das zweite Element (2) zu drehen.

6. Transportvorrichtung (40) nach Anspruch 1, wobei das zweite Element (2) Endanschläge aufweist, die geeignet sind, die Drehung des ersten Elements (1) in Bezug auf das zweite Element (2) in beweglichem Zustand zu beschränken.

7. Transportvorrichtung (40) nach einem der Ansprüche 2 bis 4, wobei eine Feder (4) in jeder Passung (6) ist, die zum Halten des Stifts (5) in der Passung (6) geeignet ist.

8. Transportvorrichtung (40) nach einem der Ansprüche 1 bis 7, wobei der Stift (5) mit einem externen Antriebsmittel (3) verbunden ist.

9. Transportvorrichtung (40) nach Anspruch 8, wobei das externe Antriebsmittel ein Kabel aufweist, das mit einem ersten Ende und einem zweiten Ende ausgestattet ist, wobei das erste Ende mit dem Stift (5) verbunden ist und das zweite Ende mit Greifmitteln ausgestattet ist.

10. Transportvorrichtung (40) nach einem der vorhergehenden Ansprüche, wobei die Schlitze (42) ausgebildet sind, um als Rampe für die Räder des Zweirads zu dienen.

## Revendications

1. Dispositif de transport (40) pour bicyclette attachable à un crochet de remorquage d'une voiture et comprenant une base de chargement (41) et un mécanisme d'inclinaison (20) pour faire tourner ladite base de chargement (41), ledit mécanisme d'inclinaison (20) comprenant un premier élément mobile (1) raccordé à ladite base de chargement (41) et un deuxième élément fixe (2), le premier élément (1) étant mobile par rapport au deuxième élément (2), dans lequel le premier élément (1) a une goupille de verrouillage mobile (5) et le deuxième élément (2) a une correspondance (6) dans laquelle la goupille de verrouillage (5) peut être mise en prise, de sorte que le premier élément (1) puisse se déplacer depuis une première condition de verrouillage, dans laquelle sa rotation par rapport au deuxième élément (2) est interdite et ladite base de chargement (41) est bloquée dans une position horizontale, vers une deuxième condition mobile, dans laquelle sa rotation par rapport au deuxième élément (2) est possible, permettant une rotation à la fois dans un sens des aiguilles d'une montre et dans un sens inverse des aiguilles d'une montre de ladite base de chargement (41), la base de chargement (41) ayant des fentes (42) aptes à loger les roues d'une bicyclette.

2. Dispositif de transport (40) selon la revendication 1, dans lequel ledit mécanisme d'inclinaison (20) comprend un ressort (4) poussant ladite goupille (5) à l'intérieur dudit deuxième élément (2) et dudit premier élément (1) en créant un bloc unique et en interdisant toute rotation dans ladite première condition de verrouillage, alors que, dans ladite deuxième condition mobile, ledit ressort (4) est compressé par ladite goupille (5) qui est poussée dans le même sens de compression dudit ressort (4), en libérant ainsi ledit deuxième élément (2) de ladite goupille (5) pour permettre ladite rotation dans le sens des aiguilles d'une montre et dans le sens inverse des aiguilles d'une montre de la base de chargement (41) raccordée audit premier élément mobile (1).

3. Dispositif de transport (40) selon la revendication 2, dans lequel ladite correspondance (6) est formée par un canal, trois canaux étant prévus dans ledit deuxième élément (2) de manière à fournir trois positions dans lesquelles la base de chargement (41) peut être bloquée.

4. Dispositif de transport (40) selon la revendication 3, dans lequel lesdites trois positions incluent une position horizontale, une position inclinée de 25° dans le sens des aiguilles d'une montre et une position inclinée de 25° dans le sens inverse des aiguilles d'une montre.

5. Dispositif de transport (40) selon l'une quelconque des revendications précédentes, dans lequel le premier élément (1) a une fente (11) ayant une coupe transversale circulaire, et le deuxième élément (2) a une coupe transversale circulaire correspondant à la coupe transversale de la fente (11), de sorte que le premier élément (1) puisse tourner autour du deuxième élément (2).

6. Dispositif de transport (40) selon la revendication 1, dans lequel le deuxième élément (2) a des butées d'extrémité aptes à contraindre la rotation du premier élément (1) par rapport au deuxième élément (2) en condition mobile.

7. Dispositif de transport (40) selon l'une quelconque des revendications 2 à 4, dans lequel un ressort (4) est à l'intérieur de chaque correspondance (6), apte à retenir la goupille (5) à l'intérieur de la correspondance (6).

8. Dispositif de transport (40) selon l'une quelconque des revendications 1 à 7, dans lequel la goupille (5) est raccordée à des moyens d'entraînement à distance (3).

9. Dispositif de transport (40) selon la revendication 8, dans lequel les moyens d'entraînement à distance comprennent un câble pourvu d'une première extrémité et d'une deuxième extrémité, la première extrémité étant raccordée à la goupille (5) et la deuxième extrémité étant pourvue de moyens de préhension.

10. Dispositif de transport (40) selon l'une quelconque des revendications précédentes, dans lequel lesdites fentes (42) sont formées de manière à servir de rampe pour les roues de la bicyclette.
